# EUROPÄISCHE PATENTSCHRIFT

(11) **EP 0 380 107 B1**
(45) Veröffentlichungstag und Bekanntmachung des Hinweises auf die Patenterteilung: **07.04.1993**
(21) Anmeldenummer: 90101518.0
(22) Anmeldetag: 25.01.1990
(51) Int. Cl.: B65D 33/36, B65D 33/38

(54) **Standbeutel**
Stand-up bag
Sachet à fond plat

(30) Priorität: 26.01.1989 DE 8900884 U; 26.01.1989 DE 8900885 U; 26.01.1989 DE 8900886 U
(43) Veröffentlichungstag der Anmeldung: 01.08.1990
(73) Patentinhaber: INDAG GESELLSCHAFT FÜR INDUSTRIEBEDARF MBH, D-69214 Eppelheim (DE)
(72) Erfinder: Wild, Rainer, Dr., D-6900 Heidelberg (DE)
(74) Vertreter: Grünecker, Kinkeldey, Stockmair & Schwanhäusser Anwaltssozietät

(56) Entgegenhaltungen:
- BE-A- 554 969
- CA-A- 1 106 317
- DE-A- 1 786 019
- FR-A- 2 307 712
- FR-A- 2 504 091
- US-A- 3 418 059
- US-A- 4 072 233
- US-A- 4 718 778

## Beschreibung

Die Erfindung betrifft einen Standbeutel aus einer heißsiegelfähigen oder -schweißbaren Kunststoff-Folie zur Aufnahme von flüssigen und/oder pastösen Medien mit zwei Seitenwände bildenden, im wesentlichen rechteckigen Flächenteilen, die an ihren Längskanten miteinander versiegelt sind, wobei zwischen den unteren Querkanten ein faltbares, sich zwischen die Seitenwände einlegendes, als Standboden dienendes unteres Bodenteil eingefügt ist, und mit einem Entnahmeteil im Bereich der oberen Querkanten.

Standbeutel aus Kunststoff-Folien sind insbesondere als Einweg-Verpackungen für Getränke bekannt. Üblicherweise handelt es sich hierbei um spitz zulaufende Verpackungen mit einem Abfüllvolumen von 0,2 l. Die verwendeten Folien solcher Getränkeverpackungen weisen eine dünne Aluminium-Folienschicht auf, die die Verpackung unter anderem stabilisiert. In die Unterseite ist ein Standboden eingearbeitet, so daß der Beutel auch nach seinem Öffnen auf eine Unterlage aufgestellt werden kann, ohne daß der Beutelinhalt aus der Entnahmeöffnung herausläuft oder der Beutel umkippt. Die Entnahmeöffnung kann beispielsweise bei solchen Getränkeverpackungen durch eine Soll-Durchstichöffnung vorgegeben werden, durch die ein an seinem Ende spitz zulaufender Strohhalm hindurchgestochen werden kann.

Neben Getränken werden in Folien-Beuteln flüssige oder pastöse Medien, beispielsweise flüssige Waschmittel, eingefüllt. Vornehmlich werden solche Folien-Beutel als Nachfüllpackungen eingesetzt.

Um eine erhöhte Stabilität solcher Standbeutel mit einem unteren Bodenteil, das zwischen die Seitenwände eingesetzt ist, zu erreichen, wobei bevorzugt solche Standbeutel aus zwei miteinander verschweißten Wandteilen bestehen, ist ein zusätzliches Deckenteil eingearbeitet, das ähnlich dem Standboden aufgebaut ist.

Ein grundsätzlicher Vorteil der Folien-Beutel kann darin gesehen werden, daß sie im ungefüllten Zustand sehr flach zusammengefaltet werden können und so nur wenig Platz beanspruchen. Gerade Standbeutel mit einem größeren Volumen, d.h. mit einem Volumen bis zu zwei Litern, werden praktisch nicht für Füllungen verwendet, die portionsweise entnommen werden, da ein geöffneter Beutel, beispielsweise durch Abschneiden einer oberen Eckkante, nicht ausreichend gewährleistet, daß beim Eindringen von Luft in den Innenraum und nach einer teilweisen Entnahme des Inhaltes eine ausreichend Standfestigkeit verbleibt.

Aus der US-A-3 418 059 ist ein flexibler Beutel für fließfähige Medien bekannt. Er kann mit verschiedenen Austrittsöffnungen versehen sein, wodurch ein gleichmäßiges Austreten des in dem Beutel enthaltenen Mediums bewirkt wird.

Aufgabe der Erfindung ist es, einen Standbeutel anzugeben, der auch bei teilweise entnommenem Inhalt eine genügende Standfestigkeit besitzt, der im entleerten Zustand platzsparend gelagert werden kann, der eine dosierte Entnahme und ein gleichmäßiges Auftragen des Inhaltes auf eine Fläche unter leichter Handhabung des Behälters ermöglicht.

Diese Aufgabe wird erfindungsgemäß durch einen Standbeutel mit den Merkmalen des Anspruchs 1 gelöst.

Mit dem Auftragskopf kann über dessen Austrittsöffnung (en) der Beutelinhalt, beispielsweise Leim, entnommen werden, indem der Beutel mit seinem Standboden nach oben und dem Stutzen nach unten gehalten und ein leichter Druck auf die Seitenwände des Beutels ausgeübt wird. Der Inhalt fließt gleichmäßig über die Austrittsöffnung(en) aus und kann darüber hinaus mit der Auftragskante gleichmäig auf einer Fläche verteilt werden. Anstelle von mehreren einzelnen Austrittsöffnungen kann ebenso ein schmaler Schlitz vorgesehen werden. Nachdem ein Flächenbereich mittels der Auftragskante mit dem Inhalt des Beutels gleichmäßig bestrichen ist, wird der Beutel auf seinem Standboden abgestellt, ohne daß er in sich zusammensinkt, da der Standboden und die miteinander versiegelten Seitenwände dem Beutel eine ausreichende Stabilität geben. Von besonderem Vorteil bei einem solchen Beutel ist das geringe Eigengewicht.

Der Stutzen weist bevorzugt einen Verteilungsraum auf, an den sich die einzelnen Austrittsöffnungen anschließen, so daß der Beutelinhalt gleichmäßig auf die einzelnen Austrittsöffnungen verteilt wird. Um einen gleichmäßigen, flächigen Auftrag zu erzielen, sollten die Austrittsöffnugen bevorzugt in einer Reihe angeordnet und darüber hinaus einen gleichen Abstand zueinander haben sowie einen gleichen Durchmesser besitzen. An die Auftragskante, mittels derer der aus den Austrittsöffnungen austretende Inhalt des Standbeutels verteilt wird, kann eine ebene Fläche angrenzen, die eine Streichfläche zum flächigen Verteilen des Inhaltes, beispielsweise eines zähflüssigen Klebers, erleichtert.

Um das Einsiegeln des Stutzens zu erleichtern, ist an seinem eingangsseitigen, mit der Folie verbundenen Ende ein im Außenquerschnitt ovaler Anschlußkonus vorgesehen, der entlang der großen Halbachse spitz zulaufen kann und in Richtung dieser großen Halbachse zwischen den Siegelnähten der Seitenwände ausgerichtet ist. Ein solcher Anschlußkonus fügt sich in eine entsprechende Öffnung in dem Beutel ein, ohne daß die Siegelnähte der Seitenwände in diesem Bereich durch zu starkes Auseinanderziehen der Seitenwandbereiche übermäßig beansprucht werden, was zu Undichtigkeiten an diesen Stellen führen könnte.

Falls Austrittsöffnungen mit länglichen Querschnitten vorgesehen sind, beispielsweise in Form von Schlitzen, sollten diese Schlitze parallel zueinander ausgerichtet sein. Der bevorzugte freie Querschnitt der Austrittsöffnungen liegt zwischen 0,5 mm bis 2 mm; außerdem sollten die Austrittsöffnungen zu ihrem ausgangsseitigen Ende hin eine Länge von 2 mm bis 5 mm mit einem gleichbleibenden Querschnitt aufweisen, wodurch gerade bei pastösem Beutelinhalt die Masse in Form eines dünnen Fadens mit gleichbleibendem Querschnitt austritt.

An die Auftragskante kann sich eine spachtelförmige Verlängerung anschließen derart, daß der aus den Austrittsöffnungen austretende Beutelinhalt auf diese Spachtel läuft und mit dieser, die flexibel sein kann, verteilbar ist. Diese spachtelförmige Verlängerung kann, je nach Einsatzgebiet, an ihrem Ende unterschiedlich gezahnt oder auf ihrer Spachtelfläche mit Rillen versehen sein.

Bevorzugt ist der Stutzen an einem konisch zulaufenden Fortsatz, der aus Folie gebildet ist und die Seltenwände nach oben hin verlängert, angeordnet, so daß auch unter geringem Beutelinhalt der Beutelinhalt durch den Stutzen oder Auftragskopf mit leichtem Druck auf die Seitenwände aus den Austrittsöffnungen strömt. Um einen an dem Anschlußstutzen angesetzten Anschlußflansch über eine größere Länge mit den Folien-Wänden des Standbeutels versiegeln zu können, sollte der obere Abschnitt des Beutels, an dem der Stutzen befestigt ist, einen gleichbleibenden Querschnitt aufweisen.

Um ein Zusetzen der Austrittsöffnungen nach wiederholtem Gebrauch des Beutels zu vermeiden, kann die Abdeckkappe kammartig angeordnete Stifte aufweisen, die sich in die Austrittsöffnungen einschieben. Nach jedem Gebrauch, nach dem die Abdeckkappe wieder auf den Entnahme-Stutzen aufgeschoben wird, durchstoßen die Stifte die Austrittsöffnungen, so daß sie nach dem erneuten Abnehmen der Kappe für den nächsten Gebrauch einen freien Durchlauf des Beutelinhaltens gewährleisten. Falls die Abdeckkappe in der Form ausgebildet ist, daß sie auf den Stutzen des Beutels aufgeklemmt wird, können diese kammartigen Stifte drehfest mit der Abdeckkappe verbunden werden. In dieser Ausbildung sind Führungsflächen in der Abdeckkappe sowie Führungsflächen an dem Stutzen, beispielweise in Form eines Konus, dienlich, damit die Stifte beim Ausetzen der Kappe in Richtung der Austrittsöffnungen ausgerichtet werden. Falls die Kappe mit einem Gewinde auf ein Außengewinde des Stutzens aufgeschraubt wird, müssen die kammartigen Stifte an einem lose in den Deckel eingelegten Teil angeordnet sein, so daß sich die Abdeckkappe beim Aufschrauben gegen diese Stifte verdrehen kann. Stifte auf flexiblem Material, die sich nachgiebig in die Austriffsöffnungen einschieben, haben sich als vorteilhaft erwiesen.

Für alle Ausführungsformen der Erfindung gilt, daß der Standbeutel aus vorgefertigen, heißsiegelfähigen Flächenteilen gefertigt wird, bevorzugt aus einer zweischichtigen Verbund-Folie. Ausgezeichnete Eingenschaften werden durch eine zum Innenraum gerichtete Folie aus Polyethylen und einer die Außenhaut bildenden Polyester-Folie erreicht. Die Verwendung einer Polyethylen-Folie in Form einer Coextrusions-Folie - hierbei handelt es sich um eine mehrschichtige Folie - bietet den Vorteil, daß die Folie, die die Innenwand des Standbeutels bildet, entsprechend der Verwendung des Standbeutels und den gegebenen Anforderungen angepaßt werden kann. So kann beispielweise die zu siegelnde Seite der Folie besonders siegelfreundlich ausgestaltet werden; ferner läßt sich mit einer solchen Coextrusions-Folie unter Änderung der Zusammensetzung eine höhere Steifigkeit erzielen. Die Dicke der nach außen gerichteten Polyester-Folie beträgt mindestens 10 µm, bevorzugt 12 µm, während die nach innen gerichtete Polyethlen-Folie oder Coextrusions-Folie eine Dicke von 80 µm bis 200 µm, bevorzugt eine Dicke von 100 µm bis 150 µm, haben sollte. Um in den Standbeutel auch lösungsmittelhaltige oder migrationsempfinliche Produkte einfüllen zu können, wird zwischen die einzelnen Folienschichten, bevorzugt im Anschluß an die nach innen gerichtete Folie, eine als Sperrschicht wirkende dünne Aluminiumfolie eingefügt, die je nach Größe des Standbeutels eine Dicke zwischen 8 µm und 15 µm haben sollte. Eine solche Aluminiumschicht verhindert beispielsweise den Austritt von Lösungsmittel durch die Wände des Beutels oder hinsichtlich migrationsempfindlichen Produkten das Eindringen von Sauerstoff in den Beutel und damit in das Produkt.

Damit eine möglichst große Standfestigkeit des Beutels erhalten wird, ist es vorteilhaft, daß der Beutel im gefüllten Zustand im unteren Bodenbereich eine nahezu zylinderförmige Form annimmt. Um dies zu erreichen, werden die beiden Seitenwände rechteckig ausgeführt und an den Längsseiten miteinander versiegelt. Das Bodenteil hat hierbei einen annähernd kreisförmigen Zuschnitt; das Bodenteil ist in dieser Form am zusammengefalteten Beutel entlang einer halbkreisförmigen Siegelnaht angesiegelt. Nach oben können die Seitenwände, abweichend von der Rechteckform, konisch zulaufen, so daß der gefüllte Standbeutel annähernd einen Kegelstumpf bildet.

Der Auftrags-Stutzen mit seinem Flansch kann aus Polyethylen oder Polypropylen hergestellt werden, das sich leicht bearbeiten läßt und gut mit einer nach innen weisenden Schicht des Beutels in Form einer Polyethylen-Folie verschweißen.

Ausführungsbeispiele der Erfindung werden nachfolgend anhand der zeichnung näher erläutert. In der Zeichnung zeigt
Figur 1 einen gefüllten Standbeutels in einer perspektivischen Ansicht,
Figur 2 den Standbeutel nach Figur 1 in entleerter, zusammengefalteter Form,
Figur 3 einen Längsschnitt durch den Standbeutel nach Figur 2 entlang der Schittlinie III-III,
Figur 4 einen Schnitt durch den Auftrags-Stutzen entlang der Schnittlinie IV-IV in Figur 3,
Figur 5 eine weitere Ausführung eines Auftrags-Stutzens und
Figur 6 einen Schnitt durch die Kunststoff-Folie, aus der der Standbeutel gefertigt. ist.

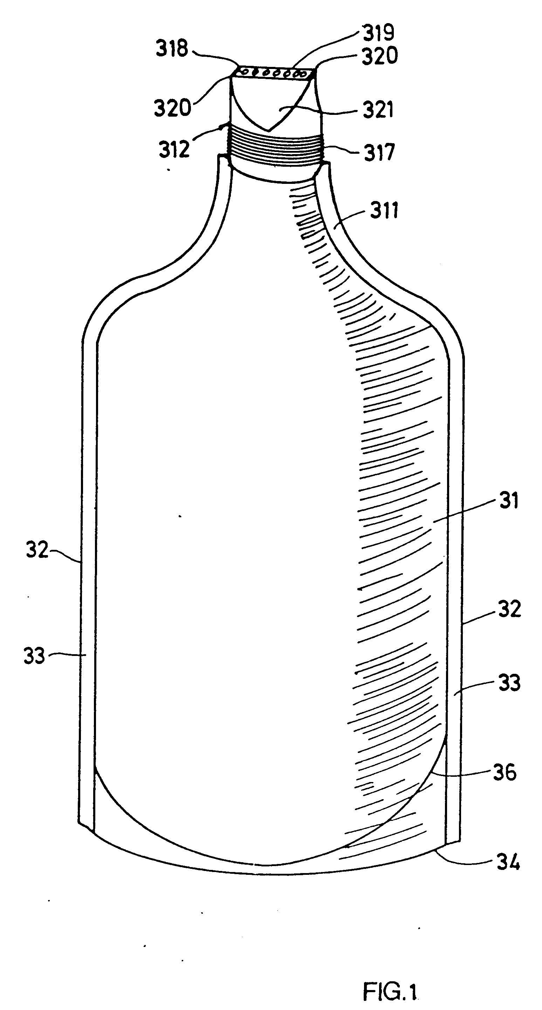

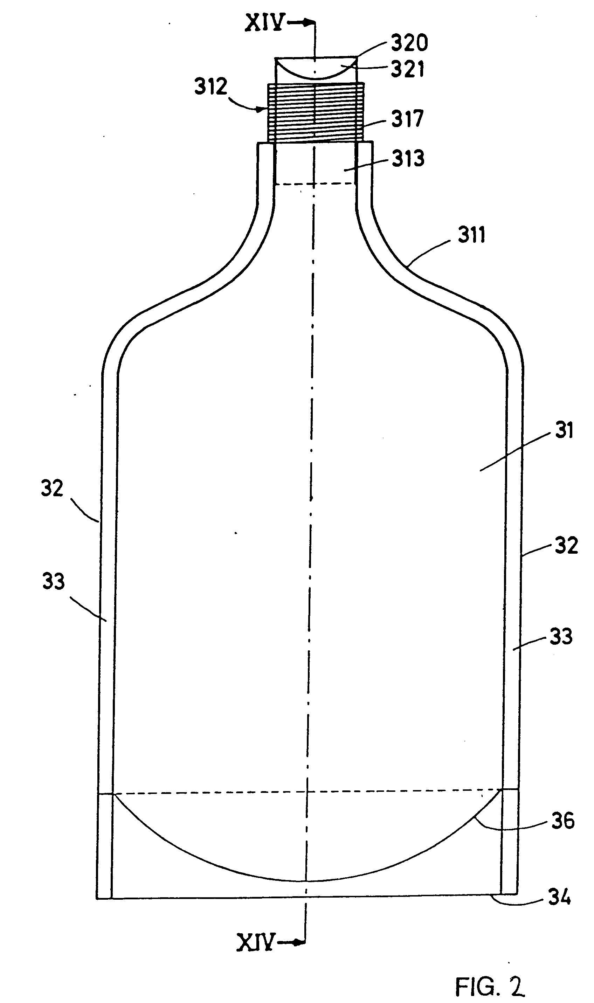

Wie die Figuren 1, 2 und 3 zeigen, weist der Standbeutel zwei Seitenwände 31 auf, die an ihren senkrecht verlaufenden Längskanten 32 heiß miteinander versiegelt sind, so daß jeweils eine Siegel- oder Schweißnaht 33 entseht. Entlang der unteren Querkanten 34 ist ein als Standboden dienendes unteres Bodenteil 35 eingesetzt, das im Zuschnitt kreis- oder ellipsenförmig ist, wie gut in Figur 2 an der Boden-Siegelnaht 36 zu erkennen ist. Das Bodenteil 35 und die Seitenwände 31 sind über den gesamten Bereich zwischen der unteren Querkante 34 und der Boden-Siegelnaht 36 flächig verschweißt oder versiegelt, so daß durch diese doppelte Kunststoff-Folie in diesem unteren Bereich eine verstärkte Beutelwand erhalten wird.

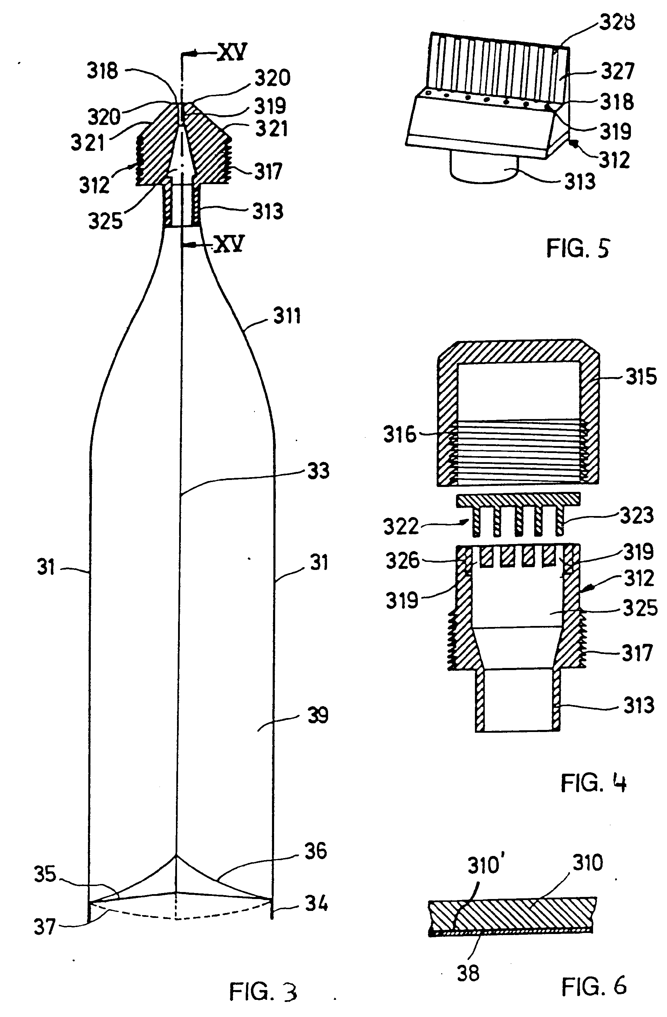

Im gefüllten Zustand hängt das untere Bodenteil 35, zumindest in seinem mittleren Bereich, nach unten durch, wie in Figur 3 durch die unterbrochene Linie 37 angedeutet ist. Durch das nach unten durchhängende Bodenteil 35 sowie die unteren, verstärkten Querkanten 34 wird eine ausgezeichnete Standfestigkeit des Standbeutels erzielt.

Alle Zuschnitte, aus denen der Standbeutel gebildet ist, bestehen aus einer zweischichtigen Kunststoff-Folie, wie sie in Figur 5 im Schnitt gezeigt ist. Die nach außen gerichtete Folie 38, die die Außenhaut bildet, ist eine Polyester-Folie mit einer Dicke von 12 um, während es sich bei der nach innen zum Innenraum 39 des Standbeutels zeigenden, die Innenhaut bildenden Folie 310 um eine als Coextrusions-Folie gefertigte Polyethylen-Folie handelt. Eine solche Coextrusions-Folie ist in mehreren Schichten aufgebaut und kann, entsprechend den Anforderungen, in ihrem Schichtaufbau bei der Extrusion variiert und den spezifischen Anforderungen entsprechend eingestellt werden. Die Folie 310 besitzt eine Dicke von 150 µm, wobei die angegebenen Foliendicken für einen Standbeutel mit einem Füllinhalt von etwa 1 bis 1,5 Liter, maximal von 2 Litern, gelten. Zwischen der die Außenhaut bildenden Folie 38 und der die Innenhaut bildenden Folie 310 ist eine als Sperrschicht wirkende dünne Aluminiumfolie 310′ eingefügt, die je nach Größe des Standbeutels eine Dicke zwischen 8 µm und 15 µm besitzt. Eine solche Aluminumschicht verhindert beispielsweise den Austritt von Lösungsmittel durch die Wände des Beutels oder hinsichtlich migrationsempfindlichen Produkten das Eindringen von Sauerstoff in den Beutel und damit in das Produkt.

Der Standbeutel besitzt eine annähernd zylinderförmige Außenkontur. Im oberen Bereich der Seitenwände 31 setzt sich nahtlos ein konsicher Fortsatz 311 an, dessen Ende die Entnahmeöffnung mit einem eingesiegelten Auftragskopf 312 bildet. Der Auftragskopf 312 besitzt, wie die Figuren 2 und 3 zeigen, einen im Querschnitt ovalen oder ellipsenförmigen Anschlußkonus 313, der in den konischen Fortsatz 311, der an seinem Ende einen gleichbleibenden Innenquerschnitt aufweist, einsgesiegelt ist. Dieser ovale Anschlußkonus 313 ist mit seiner großen Halbachse in Richtung der beiden Siegelnähte 33, die die Längskanten 32 der Seitenwände 31 miteinander verbinden, ausgerichtet und läuft im Übergangsbereich der beiden Seitenwände, zu deren Verbindngsstelle spitz zu, so daß er sich an diesen Stellen in den Verlauf der Seitenwände 31 einfügt; die Seitenwände 31 werden dadurch an diesen Nahtsellen nicht übermäßig beansprucht. Der Auftragskopf 312 kann, wie Figur 4 zeigt, mit einer Abdeckkappe 315 verschlossen werden, die über ein Innengewinde 316 auf ein Außengewinde 317 des Auftragskopfes 312 aufgeschraubt wird. Am Ende des Auftragskopfes 312 münden in eine ebene Fläche 318 fünf Austrittsöffnungen 319 mit einem Querschnitt von etwa 1 mm. Diese ebene Fläche 318 bildet zwei Auftragskanten 320, an denen sie in abgeschrägte Flächen 321 übergeht. Abgesehen von diesen abgeschrägten Flächen 321 ist der Auftragskopf 312 in seinem Querschnitt kreisförmig. Sowohl die Auftragskanten 320 als auch die ebene Fläche 318 und die abgeschrägten Flächen 321 dienen dazu, den aus den Austrittsöffnungen 319 austretenden Beutelinhalt auf einer Fläche aufzutragen bzw. gleichmäßig zu verteilen. Beim Auftrag wird der Standbeutel mit dem Auftragskopf 312 nach unten gehalten, so daß der Inhalt aus den Austrittsöffnungen 319 austritt, ggf. durch leichten Druck auf die Seitenwände 31. Durch die Ausgestaltung des Beutels mit seinem als Standboden dienenden unteren Bodenteil 35 und den miteinander versiegelten Seitenwände 31 wird eine ausreichende Stabilität des Beutels auch nach teilweiser entnahme seines Inhaltes gewährleistet, so daß er auch dann noch sicher auf dem Boden aufrecht steht. In die Abdeckkappe 315 ist ein Einsatzteil 322 eingefügt, das entsprechend der Verteilung der Austriffsöffnungen 19 des Auftragskopfes 312 Stifte 323 besitzt, die beim Verschließen des Auftragskopfes 312 nach Gebrauch in die Austrittsöffnungen 319 eingeschoben werden. Hierdurch wird gewährleistet, daß die Austriffsöffnungen auch nach wiederholtem Gebrauch offen sind, also nicht durch den Inhalt des Beutels verklebt werden. Dieses Einsatzteil 322 legt sich in die Innenseite der Abdeckkappe 315 an; es dreht sich beim öffnen und Verschließen der Abdeckkappe 315 nicht mit. Das Einsatzteil 322 kann in einer Ausführung der Abdeckkappe 315, in der diese nur auf den Auftragskopf 312 aufgeklemmt wird, also kein Gewinde besitzt, drehfest an die Abdeckkappe 315 integriert werden.

Die Auftragsöffnungen 319 sind von ihrem ausgangsseitgen Ende aus gesehen in einer Länge von 5 mm mit einem gleichbleibenden Querschnitt ausgeführt und verlaufen parallel zueinander. Zwischen diesen Austriffsöffnungen 319 und dem Anschlußkonus 313 ist ein Verteilungsraum 325 vorgeshen, so daß der Beutelinhalt über diesen Verteilungsraum 325 gleichmäßig auf die einzelnen Austriffsöffnungen 319 verteilt wird. Die Austrittsöffnungen 319m können Teil eines Einsatzes sein, durch die Linien 326 angedeutet, so daß je nach Anforderung in den Auftragskopf 312 unterschiedliche Einsätze mit unterschiedlich angeordneten Austrittsöffnungen 319 eingesetzt bzw. eingeführt werden können. Der Auftragskopf nach Figur 5 besitzt, im Gegensatz zu dem Auftragskopf nach Figur 4, sieben Austrittsöffnungen 319 sowie eine spachtelförmige Verlängerung 327, die sich an die ebene Fläche 318, in die die Auftragsöffnungen 319 münden, anschließt. Ansonsten ist der Auftragskopf 312 nach Figur 5 ähnlich der Ausführungsform nach Figur 4 aufgebaut und läßt sich ebenfalls durch eine Abdeckkappe, die aufgesteckt werden kann, verschließen. Die spachtelförmige Verlängerung 327, die bevorzugt aus flexiblem Material gebildet ist, weist mehrere Rillen 328 auf, die in Richtung der Achsen der Austrittsöffnungen 379 verlaufen und dazu dienen, den aus den Austrittsöffnungen 379 austretenden Beutelinhalt auf eine Fläche zu verteilen.

## Patentansprüche

1. Standbeutel aus einer heißsiegelfähigen oder schweißbaren Kunststoff-Folie zur Aufnahme von flüssigen und/oder pastösen Medien mit zwei Seitenwände bildenden, im wesentlichen rechteckigen Flächenteilen, die an ihren Längskanten miteinander versiegelt sind, wobei zwischen den unteren Querkanten ein faltbares, sich zwischen die Seitenwände einlegendes, als Standboden dienendes unteres Bodenteil eingefügt ist, und mit einem Entnahmeteil im Bereich der oberen Querkanten,
**dadurch gekennzeichnet**,
daß das Entnahmeteil in Form eines eingesetzten Auftragskopfes (312) ausgebildet ist und sich an ein eine Entnahmeöffnung bildendes gegenüber dem Querschnitt des Beutels verjüngt ausgebildetes Ende des Beutels anschließt, wobei der Auftragskopf (312) eine Auftragskante (320) aufweist, entlang derer mindestens eine Austrittsöffnung (319) mündet, deren jeweilige Querschnittsfläche am Austritt klein ist gegen die freie Innenquerschnittsfläche des Austrittskopfes (313) an seinem mit der Folie verbundenen eingangsseitigen Ende.

2. Standbeutel nach Anspruch 1,
**dadurch gekennzeichnet**,
daß die Austrittsöffnung (319) mit einer Abdeckkappe (315) verschlossen ist.

3. Standbeutel nach Anspruch 1 oder 2,
**dadurch gekennzeichnet**,
daß zwischen den Austrittsöffnungen (319) und dem eingangsseitigen Ende des Auftragskopfes (313) ein Verteilungsraum (325) vorgesehen ist.

4. Standbeutel nach einem der Ansprüche 1 bis 3,
**dadurch** **gekennzeichnet**,
daß die Austrittsöffnungen (319) in einer Reihe angeordnet sind.

5. Standbeutel nach einem der Ansprüche 1 bis 4,
**dadurch gekennzeichnet**,
daß die Auftragskante (320) an eine ebene Fläche (318) angrenzt, in die die Austrittsöffnungen (319) münden.

6. Standbeutel nach einem der Ansprüche 1 bis 5,
**dadurch gekennzeichnet**,
daß der Stutzen (312) an seinem eingangsseitigen, mit der Folie verbundenen Ende einen im Außenquerschnitt ovalen Anschlußkonus (313) aufweist.

7. Standbeutel nach einem der Ansprüche 1 bis 6,
**dadurch gekennzeichnet**,
daß die Austrittsöffnungen (319) parallel zueinander verlaufen.

8. Standbeutel nach einem der Ansprüche 1 bis 7,
**dadurch gekennzeichnet**,
daß die Austrittsöffnungen (319) Bohrungen sind, die mit ihrer Achse in Richtung der Längsachse des Beutels ausgerichtet sind.

9. Standbeutel nach einem der Ansprüche 1 bis 8,
**dadurch gekennzeichnet**,
daß die Austrittsöffnungen (319) einen Querschnitt von 0,5 mm bis 2 mm aufweisen.

10. Standbeutel nach einem der Ansprüche 1 bis 9,
**dadurch gekennzeichnet**,
daß die Austrittsöffnungen (319) von ihrem ausgangsseitigen Ende aus gesehen eine Länge von 2 mm bis 5 mm mit gleichbleibendem Querschnitt aufweisen.

11. Standbeutel nach einem der Ansprüche 1 bis 10,
**dadurch gekennzeichnet**,
daß an die Auftragskante (320) anschließend eine spachtelförmige Verlängerung (327) angeordnet ist.

12. Standbeutel nach einem der Ansprüche 1 bis 11,
**dadurch gekennzeichnet**,
daß die spachtelförmige Verlängerung (327) Rillen (328) aufweist, die in Richtung der Achse der Austrittsöffnungen (319) verlaufen.

13. Standbeutel nach einem der Ansprüche 1 bis 12,
**dadurch gekennzeichnet**,
daß der Auftragskopf (312) an einem konisch zulaufenden Fortsatz (311) des Beutels angeordnet ist.

14. Standbeutel nach einem der Ansprüche 1 bis 13,
**dadurch gekennzeichnet**,
daß der Abschnitt des Beutels, an dem der Auftragskopf (312) befestigt ist, einen gleichbleibenden Querschnitt aufweist.

15. Standbeutel nach einem der Ansprüche 1 bis 14,
**dadurch gekennzeichnet**,
daß die Abdeckkappe (315) kammartig angeordnete Stifte (323) aufweist, die sich in die Austrittsöffnungen (319) einschieben.

16. Standbeutel nach Anspruch 15,
**dadurch gekennzeichnet**,
daß die Stifte (323) aus flexiblem Material bestehen.

17. Standbeutel nach Anspruch 15 oder 16,
**dadurch gekennzeichnet**,
daß die Stifte (323) an einem in die Abdeckkappe (315) eingesetzten Einsatzteil (322) angeordnet sind.

18. Standbeutel nach einem der Ansprüche 1 bis 17,
**dadurch gekennzeichnet**,
daß die Kunststoff-Folie eine zweischichtige Verbund-Folie (38, 310) ist.

19. Standbeutel nach Anspruch 18,
**dadurch gekennzeichnet**,
daß die zum Innenraum (39) gerichtete Folie (310) eine Polyethylen-Folie ist.

20. Standbeutel nach Anspruch 18 oder 19,
**dadurch gekennzeichnet**,
daß die nach außen gerichtete, die Außenhaut bildende Folie (38) eine Polyester-Folie ist.

21. Standbeutel nach Anspruch 18,
**dadurch gekennzeichnet,**
daß die Polyethylen-Folie eine Coextrusions-Folie ist.

22. Standbeutel nach einem der Ansprüche 18 bis 21,
**dadurch gekennzeichnet**,
daß die nach außen gerichtete Folie (38) eine Dicke von mindestens 10 µm aufweist.

23. Standbeutel nach Anspruch 22,
**dadurch gekennzeichnet**,
daß die Dicke der nach außen gerichteten Folie (38) 12 µm beträgt.

24. Standbeutel nach einem der Ansprüche 18 bis 23,
**dadurch gekennzeichnet**,
daß die nach innen gerichtete Folie (310) eine Dicke von 80 µm bis 200 µm aufweist.

25. Standbeutel nach Anspruch 24,
**dadurch gekennzeichnet**,
daß die Dicke der nach innen gerichteten Folie (310) 100 µm bis 150 µm beträgt.

26. Standbeutel nach einem der Ansprüche 18 bis 25,
**dadurch gekennzeichnet,**
daß zwischen den Schichten der Verbund-Folie (39, 310) eine Aluminiumfolie angeordnet ist.

27. Folienbeutel nach Anspruch 26,
**dadurch gekennzeichnet**,
daß die Aluminiumfolie (310) eine Dicke zwischen 8 µm und 15 µm aufweist.

## Claims

1. Flat-ended bag made of a heat-sealable or weldable plastics film to receive liquid and/or paste-like media, having substantially rectangular flat parts forming two side walls, which flat parts are sealed together at their longitudinal edges, a foldable lower base part, which lies in between the side walls and serves as a standing base, being inserted between the lower lateral edges, and having a removal part in the region of the upper lateral edges, characterised in that the removal part is designed in the form of an inserted application head (312) and adjoins an end of the bag which forms a removal opening and is narrowed with respect to the cross-section of the bag, the application head (312) having an application edge (320) along which at least one outlet opening (319) opens, the respective cross-sectional area of which is small at the outlet compared with the free internal cross-sectional area of the outlet head (313) at its entranceside end connected to the film.

2. Flat-ended bag according to Claim 1, characterised in that the outlet opening (319) is closed with a cover cap (315).

3. Flat-ended bag according to Claim 1 or 2, characterised in that a distribution chamber (325) is provided between the outlet openings (319) and the entrance-side end of the application head (313).

4. Flat-ended bag according to one of Claims 1 to 3, characterised in that the outlet openings (319) are disposed in a row.

5. Flat-ended bag according to one of Claims 1 to 4, characterised in that the application edge (320) adjoins a flat surface (318) into which the outlet openings (319) open.

6. Flat-ended bag according to one of Claims 1 to 5, characterised in that the nozzle (312) has at its entrance-side end connected to the film a connection cone (313) that is oval in external cross-section.

7. Flat-ended bag according to one of Claims 1 to 6, characterised in that the outlet openings (319) extend parallel to each other.

8. Flat-ended bag according to one of Claims 1 to 7, characterised in that the outlet openings (319) are holes, which are aligned with their axis in the direction of the longitudinal axis of the bag.

9. Flat-ended bag according to one of Claims 1 to 8, characterised in that the outlet openings (319) have a cross-section of 0.5 mm to 2 mm.

10. Flat-ended bag according to one of Claims 1 to 9, characterised in that the outlet openings (319), seen from their exit-side end, have a length of 2 mm to 5 mm with uniform cross-section.

11. Flat-ended bag according to one of Claims 1 to 10, characterised in that a spatula-shaped extension (327) is disposed adjoining the application edge (320).

12. Flat-ended bag according to one of Claims 1 to 11, characterised in that the spatula-shaped extension (327) has grooves (328), which extend in the direction of the axis of the outlet openings (319).

13. Flat-ended bag according to one of Claims 1 to 12, characterised in that the application head (312) is disposed on a conically tapering continuation (311) of the bag.

14. Flat-ended bag according to one of Claims 1 to 13, characterised in that the section of the bag to which the application head (312) is fastened has a uniform cross-section.

15. Flat-ended bag according to one of Claims 1 to 14, characterised in that the cover cap (315) has pins (323) disposed in a comb-like manner, which push themselves into the outlet openings (319).

16. Flat-ended bag according to Claim 15, characterised in that the pins (323) consist of flexible material.

17. Flat-ended bag according to Claim 15 or 16, characterised in that the pins (323) are disposed on an insert part (322) inserted in the cover cap (315).

18. Flat-ended bag according to one of Claims 1 to 17, characterised in that the plastics film is a two-layer composite film (38, 310).

19. Flat-ended bag according to Claim 18, characterised in that the film (310) directed towards the interior space (39) is a polyethylene film.

20. Flat-ended bag according to Claim 18 or 19, characterised in that the outwardly-directed film (38) forming the outer skin is a polyester film.

21. Flat-ended bag according to Claim 18, characterised in that the polyethylene film is a coextruded film.

22. Flat-ended bag according to one of Claims 18 to 21, characterised in that the outwardly-directed film (38) has a thickness of at least 10 µm.

23. Flat-ended bag according to Claim 22, characterised in that the thickness of the outwardly-directed film (38) is 12 µm.

24. Flat-ended bag according to one of Claims 18 to 23, characterised in that the inwardly-directed film (310) has a thickness of 80 µm to 200 µm.

25. Flat-ended bag according to Claim 24, characterised in that the thickness of the inwardly-directed film (310) is 100 µm to 150 µm.

26. Flat-ended bag according to one of Claims 18 to 25, characterised in that an aluminium foil is disposed between the layers of the composite film (39, 310).

27. Film bag according to Claim 26, characterised in that the aluminium foil (310) has a thickness between 8 µm and 15 µm.

## Revendications

1. Sachet autoporteur constitué d'une feuille de plastique pouvant se sceller à chaud ou se souder, pour recevoir des produits fluides et/ou pâteux, comportant deux portions de surface sensiblement rectangulaire, qui forment les parois latérales et sont scellées l'une à l'autre par leurs bords longitudinaux, étant précisé qu'entre les bords transversaux inférieurs est insérée une portion inférieure formant fond, pliable, s'insérant entre les parois latérales et formant fond porteur, et comportant aussi une pièce de prélèvement dans la zone de ses bords transversaux supérieurs,
sachet caractérisé
par le fait que la pièce de prélèvement a la forme d'une tête d'application (312) insérée et se raccorde à une extrémité du sachet qui forme une ouverture de prélèvement et va en se rétrécissant par rapport à la section du sachet, étant précisé que la tête d'application (309) présente un bord d'application (320) le long duquel débouche au moins une ouverture de sortie (319) dont la surface de la section respective à la sortie est petite par rapport à la surface de la section intérieure libre de la tête de sortie (313) à son extrémité reliée à la feuille du côté de l'entrée.

2. Sachet autoporteur selon la revendication 1,
caractérisé
par le fait que l'ouverture de sortie (319) est obturée par un capuchon (315).

3. Sachet autoporteur selon la revendication 1 ou 2,
caractérisé
par le fait qu'entre les ouvertures de sortie (319) et l'extrémité de la tête d'application (313) située du côté de l'entrée est prévu un espace de répartition (325).

4. Sachet autoporteur selon l'une des revendications 1 à 3,
caractérisé
par le fait que les ouvertures de sortie (319) sont disposées sur une rangée.

5. Sachet autoporteur selon l'une des revendications 1 à 4,
caractérisé
par le fait que le bord d'application (320) jouxte une surface plane (318) dans laquelle débouchent les ouvertures de sortie (319).

6. Sachet autoporteur selon l'une des revendications 1 à 5,
caractérisé
par le fait que la tubulure (312) présente, à son extrémité située du côté de l'entrée et reliée à la feuille, un cône de raccordement (313) de section extérieure ovale.

7. Sachet autoporteur selon l'une des revendications 1 à 6,
caractérisé
par le fait que les ouvertures de sortie (319) sont orientées parallèlement l'une à l'autre.

8. Sachet autoporteur selon l'une des revendications 1 à 7,
caractérisé
par le fait que les ouvertures de sortie (319) sont des perçages qui, par leur axe, sont orientés selon la direction de l'axe longitudinal du sachet.

9. Sachet autoporteur selon l'une des revendications 1 à 8,
caractérisé
par le fait que les ouvertures de sortie (319) présentent une section de 0,5 mm à 2 mm.

10. Sachet autoporteur selon l'une des revendications 1 à 9,
caractérisé
par le fait que les ouvertures de sortie (319) présentent, depuis leur extrémité située du côté de la sortie, une longueur de 2 mm à 5 mm de section constante.

11. Sachet autoporteur selon l'une des revendications 1 à 10,
caractérisé
par le fait qu'au bord d'application (320) se raccorde un prolongement en forme de spatule (327).

12. Sachet autoporteur selon l'une des revendications 1 à 11,
caractérisé
par le fait que le prolongement en forme de spatule (327) présente des rainures (328) qui sont orientées selon la direction de l'axe des ouvertures de sortie (319).

13. Sachet autoporteur selon l'une des revendications 1 à 12,
caractérisé
par le fait que la tête d'application (312) est disposée sur un prolongement (311) du sachet qui se termine en cône.

14. Sachet autoporteur selon l'une des revendications 1 à 13,
caractérisé
par le fait que la portion du sachet à laquelle est fixée la tête d'application (312) présente une section constante.

15. Sachet autoporteur selon l'une des revendications 1 à 14,
caractérisé
par le fait que le capuchon (315) présente des broches (323) qui sont disposées à la façon d'un peigne et qui s'enfilent dans les ouvertures de sortie (319).

16. Sachet autoporteur selon la revendication 15,
caractérisé
par le fait que les broches (323) sont un matériau flexible.

17. Sachet autoporteur selon la revendication 15 ou 16,
caractérisé
par le fait que les broches (323) sont disposées sur une garniture (322) insérée dans le capuchon (315).

18. Sachet autoporteur selon l'une des revendications 1 à 17,
caractérisé
par le fait que la feuille de plastique est une feuille composite à double couche (38, 310).

19. Sachet autoporteur selon la revendication 18,
caractérisé
par le fait que la feuille (310) orientée vers l'espace intérieur (39), est une feuille de polyéthylène.

20. Sachet autoporteur selon la revendication 18 ou 19,
caractérisé
par le fait que la feuille (38) orientée vers l'extérieur et formant la peau extérieure est une feuille de polyester.

21. Sachet autoporteur selon la revendication 18,
caractérisé
par le fait que la feuille de polyéthylène est une feuille obtenue par coextrusion.

22. Sachet autoporteur selon l'une des revendications 18 à 21,
caractérisé
par le fait que la feuille (38) orientée vers l'extérieur présente une épaisseur d'au moins 10 µm.

23. Sachet autoporteur selon la revendication 22,
caractérisé
par le fait que l'épaisseur de la feuille (38) orientée vers l'extérieur est de 12 µm.

24. Sachet autoporteur selon l'une des revendications 18 à 23,
caractérisé
par le fait que la feuille (310) orientée vers l'intérieur présente une épaisseur de 80 µm à 200 µm.

25. Sachet autoporteur selon la revendication 24,
caractérisé
par le fait que l'épaisseur de la feuille (310) orientée vers l'intérieur est de 100 µm à 150 µm.

26. Sachet autoporteur selon l'une des revendications 18 à 25,
caractérisé
par le fait qu'entre les couches de la feuille composite (39, 310) est disposée une feuille d'aluminium.

27. Sachet de feuilles selon la revendication 26,
caractérisé
par le fait que la feuille d'aluminium (310) a une épaisseur comprise entre 8 µm et 15 µm.
